# FASCICULE DE BREVET EUROPEEN

(11) **EP 1 058 362 B1**
(45) Date de publication et mention de la délivrance du brevet: **16.09.2009**
(21) Numéro de dépôt: 00401001.3
(22) Date de dépôt: 11.04.2000
(51) Int. Cl.: H02G 3/14

(54) **Boîte pour équipement électrique, à lien entre les deux éléments qui la constituent**
Gehäuse für elektrische Geräte mit Verbinder zwischen zwei Elementen
Electrical equipment box with link between its two elements

(30) Priorité: 03.06.1999 FR 9906986
(43) Date de publication de la demande: 06.12.2000
(73) Titulaire: Legrand France, 87000 Limoges (FR); Legrand SNC, 87000 Limoges (FR)
(72) Inventeur: Delage, Jean-Christophe, 87000 Limoges (FR); Jardinier, Emmanuel, 87700 Saint Yriex Sous Aixe (FR)
(74) Mandataire: Santarelli

(56) Documents cités:
- EP-A- 0 736 941
- DE-U- 9 216 735

## Description

La présente invention concerne d'une manière générale les boîtes du genre comportant deux éléments de boîte distincts et complémentaires, à savoir un corps de boîte et un couvercle, le couvercle pouvant par exemple être rapporté par simple encliquetage sur le corps de boîte.

Elle vise plus particulièrement celles de ces boîtes qui sont destinées au logement d'un quelconque équipement électrique.

Il peut s'agir par exemple d'un simple boîtier de dérivation.

Mais, d'une manière plus générale, il peut s'agir tout aussi bien d'une quelconque enveloppe.

Il a été proposé, de longue date, notamment dans le brevet suisse No 470 598, d'établir un lien de l'un à l'autre des deux éléments de boîte, pour les rendre imperdables l'un par rapport à l'autre.

Ainsi, lorsque, par exemple, celui de ces éléments de boîte qui forme le corps de l'ensemble est fixé à un quelconque support, l'utilisateur est sûr d'avoir en permanence à sa disposition le couvercle nécessaire à sa fermeture.

Dans le brevet suisse No 470 598, le lien ainsi établi de l'un à l'autre des deux éléments de boîte comporte un fil souple, qui, par ses extrémités, est attelé aux éléments de boîte, ce fil souple présentant, en pratique, pour ce faire, à chacune de ses extrémités, un renflement, par lequel il est susceptible de venir en appui sur un organe de retenue, tel que bague ou goupille, solidaire de l'élément de boîte correspondant, et qui constitue donc une simple butée d'arrêt formant garde.

Du point de vue de "l'imperdabilité", cette disposition donne incontestablement satisfaction.

Mais elle présente par ailleurs divers inconvénients, qui sont les suivants.

Tout d'abord, si un certain démontage du lien est possible, ce démontage est, en pratique, très malaisé, notamment parce qu'il nécessite d'intervenir sur plusieurs pièces, et parce que l'accès à celles-ci et/ou leur manipulation sont eux-mêmes plus ou moins ardus.

Or, pour certaines applications au moins, l'utilisateur peut souhaiter pouvoir procéder rapidement, et aisément à un tel démontage, pour une désolidarisation totale du couvercle.

En pratique, pour procéder rapidement à une telle désolidarisation, l'utilisateur n'a pas d'autre solution que de rompre le fil souple correspondant.

Mais le démontage ainsi effectué est alors irréversible.

Autrement dit, il n'est plus possible, à l'utilisateur, de rendre à nouveau le couvercle solidaire du corps de boîte.

Par ailleurs, et il s'agit là d'un autre inconvénient, dans le brevet suisse No 470 598, le lien établi de l'un à l'autre des deux éléments de boîte intervient à l'extérieur de la boîte, à la faveur de fûts tubulaires faisant saille sur la surface extérieure des deux éléments de boîte, au détriment de l'encombrement hors tout et de l'esthétique de l'ensemble.

D'autres réalisations, postérieures au brevet suisse No 470 598, présentent, elles aussi, les inconvénients d'un lien non aisément démontable, voire permanent, et/ou irréversible.

En outre, lorsque, dans ces réalisations, le lien intervient, non plus à l'extérieur de la boîte, mais à l'intérieur de celle-ci, il empiète alors le plus souvent de manière non négligeable sur son volume utile.

La présente invention a d'une manière générale pour objet une disposition permettant de minimiser, sinon annuler, ces inconvénients.

De manière plus précise, elle a pour objet une boîte pour équipement électrique, du genre comportant deux éléments de boîte distincts et complémentaires, à savoir un corps de boîte et un couvercle, et un lien établi de l'un à l'autre de ces deux éléments de boîte, ce lien comportant un fil souple qui, par ses extrémités, est attelé aux deux éléments de boîte, et qui, à l'une de ses extrémités, au moins, présente au moins un renflement, cette boîte étant d'une manière générale caractérisée en ce que, par l'extrémité du fil souple présentant un renflement, le lien est simplement en prise par encliquetage, et donc de manière aisément démontable, avec l'élément de boîte concerné.

Par exemple, suivant une forme de réalisation envisageable, l'encliquetage pratiqué intervient directement au niveau du fil souple, le renflement que comporte celui-ci à son extrémité étant une simple butée d'arrêt formant garde.

En variante, suivant une autre forme de réalisation envisageable, cet encliquetage intervient au contraire au niveau du renflement lui-même.

Quoi qu'il en soit, grâce à cet encliquetage, l'un et/ou l'autre des deux éléments de boîte peuvent avantageusement, au gré de l'utilisateur, être démontés et remontés, les démontages et remontages correspondants se faisant très facilement et manuellement, c'est-à-dire sans l'aide d'un quelconque outil.

Ainsi, le choix est laissé à l'utilisateur de garder le couvercle attenant au corps de boîte ou de le désolidariser de celui-ci.

En outre, ne faisant intervenir que des constituants simples, qui se réduisent en pratique au fil souple et à un ou deux pions d'encliquetage, le lien suivant l'invention est avantageusement peu volumineux, et, lorsqu'il intervient à l'intérieur de la boîte, il n'empiète donc avantageusement que de manière assez peu sensible sur le volume utile de celle-ci.

Les caractéristiques et avantages de l'invention ressortiront d'ailleurs de la description qui va suivre, à titre d'exemple, en référence aux dessins schématiques annexés sur lesquels :
la figure 1 est une vue en perspective d'une boîte suivant l'invention, représentée ouverte ;
la figure 2 reprend, à échelle supérieure, un détail de la figure 1 relatif à un pion d'encliquetage prévu suivant l'invention ;
la figure 3 est, à échelle différente, une vue partielle en coupe passant par l'axe de ce pion d'encliquetage, suivant la ligne III-III de la figure 2 ;
la figure 4 est une vue partielle en perspective qui, analogue à celle de la figure 3, se rapporte à une variante de réalisation ;
la figure 5 est une vue partielle en coupe qui, analogue, elle, à celle de la figure 3, se rapporte à une autre variante de réalisation ;
les figures 6 et 7 sont, chacune à des échelles différentes, des vues qui, analogues, chacune respectivement, à celles des figures 2 et 3, se rapportent à une autre variante de réalisation.

Tel qu'illustré sur ces figures, et de manière connue en soi, la boîte 10 suivant l'invention comporte, globalement, d'une part, deux éléments de boîte 10A, 10B distincts et complémentaires, à savoir un corps de boîte et un couvercle, et, d'autre part, suivant des modalités décrites plus en détail ultérieurement, un lien 11 établi de l'un à l'autre de ces deux éléments de boîte 10A, 10B.

Par exemple, et tel que représenté, cette boîte 10 a, en section transversale, un contour circulaire.

Mais sa section transversale peut tout aussi bien avoir un autre contour, et, par exemple, un contour quadrangulaire.

Quoi qu'il en soit, l'élément de boîte 10A formant corps de boîte présente un fond 12 et une paroi latérale 13.

Corollairement, l'élément de boîte 10B formant couvercle présente un panneau de façade 14 et un bord tombé 15, et, dans les formes de réalisation représentées, il est adapté à s'engager, par ce bord tombé 15, sur l'élément de boîte 10A, à la faveur d'une feuillure 16 prévue extérieurement à cet effet à la partie supérieure de la paroi latérale 13 de celui-ci.

Préférentiellement, des moyens d'emboîtement, tels que, par exemple, des moyens d'encliquetage, sont conjointement prévus entre les deux éléments de boîte 10A, 10B, pour assurer, de manière débrayable, leur solidarisation l'un à l'autre.

En pratique, la boîte 10 suivant l'invention est destinée au logement d'un quelconque équipement électrique non représenté.

Par exemple, et tel que représenté, il peut s'agir d'un simple boîtier de dérivation.

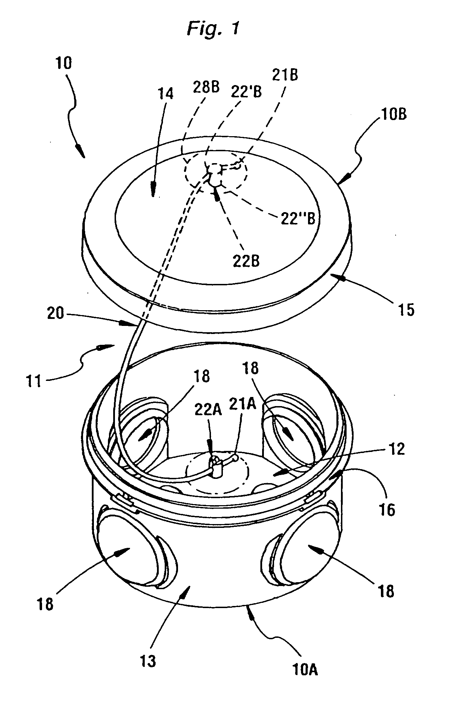

De manière connue en soi, la paroi latérale 13 de l'élément de boîte 10A formant corps de boîte présente, alors, tel que schématisé sur la figure 1, pour le passage de câbles électriques, plusieurs opercules défonçables 18, convenablement répartis de place en place le long de son pourtour.

Les dispositions qui précèdent étant bien connues par elles-mêmes, et en relevant pas, en propre, de la présente invention, elles ne seront pas décrites plus en détail ici.

De manière également connue en soi, le lien 11 établi de l'un à l'autre des deux éléments de boîte 10A, 10B comporte un fil souple 20, qui, par ses extrémités, est attelé aux éléments de boîte 10A, 10B, et qui, à l'une de ses extrémités, au moins, présente un renflement 21A, 21B.

Suivant l'invention, par l'extrémité du fil souple 20 présentant un tel renflement 21A, 21B, le lien 11 est simplement en prise par encliquetage, et donc de manière aisément démontable, suivant des dispositions décrites plus en détail ultérieurement, avec l'élément de boîte 10A, 10B concerné.

Dans les formes de réalisation représentées, le lien 11 s'étend de la surface intérieure de l'un des éléments de boîte 10A, 10B à la surface intérieure de l'autre de ceux-ci.

Plus précisément, il s'étend, dans ces formes de réalisation, de la surface intérieure du fond 12 de l'élément de boîte 10A formant corps de boîte à la surface intérieure du panneau de façade 14 de l'élément de boîte 10B formant couvercle.

En outre, dans ces formes de réalisation, le fil souple 20 que comporte ce lien 1 1 présente un renflement 21A, 21 B à chacune de ses extrémités, et, en section transversale, il a, sur toute sa longueur, de l'un à l'autre des renflements 21A, 21B, un contour circulaire.

En pratique, ce contour circulaire est uniforme sur toute la longueur du fil souple 20.

En pratique, également, les dispositions sont identiques à l'une et l'autre des extrémités du fil souple 20.

Seules seront donc décrites dans ce qui suit les dispositions relatives à l'extrémité du fil souple 20 concernée par l'élément de boîte 10A formant corps de boîte.

Dans les formes de réalisation plus particulièrement représentées sur les figures 1 à 5, pour l'une au moins des extrémités du fil souple 20, l'encliquetage recherché intervient directement au niveau de ce fil souple 20.

Plus précisément, par l'extrémité du fil souple 20 présentant, par exemple, le renflement 21 A, le lien 11 est en prise avec un pion d'encliquetage 22A solidaire de l'élément de boîte 10A concerné, ce pion d'encliquetage 22A présentant une fente 23, qui s'étend sur une partie, au moins, de sa hauteur à compter de son extrémité libre 24, et dont la largeur L1 est inférieure à la dimension L2 correspondante du fil souple 20, en l'espèce le diamètre de celui-ci, avec, formant localement un épanouissement de cette fente 23, pour la réception du fil souple 20, un évidement 25, qui s'étend transversalement par rapport à l'axe A du pion d'encliquetage 22A.

Dans les formes de réalisation représentées, le pion d'encliquetage 22A fait saillie sur le fond 12 de l'élément de boîte 10A, et l'évidement 25 s'étend sensiblement parallèlement à ce fond 12, à ras avec celui-ci.

En outre, dans ces formes de réalisation, la fente 23 du pion d'encliquetage 22A s'étend sur toute la hauteur de celui-ci, et, à l'extrémité libre 24 de ce pion d'encliquetage 22A, elle est évasée vers l'extérieur.

Dans les formes de réalisation plus particulièrement représentées sur les figures 1 à 4, l'évidement 25 intervient à la base de la fente 23, et il s'étend axialement sur une hauteur H1 supérieure à la dimension H2 correspondante du fil souple 20, en l'espèce le diamètre de celui-ci.

Du côté de l'extrémité libre 24 du pion d'encliquetage 22A, les deux portions 25', 25" de l'évidement 25 correspondant chacune respectivement aux deux portions 22'A, 22"A du pion d'encliquetage 22A délimitées par la fente 23 sont chacune délimitées par un cran de retenue 26', 26" qui s'étend sensiblement transversalement par rapport à l'axe A du pion d'encliquetage 22A.

L'évidement 25 a, ainsi, en élévation, c'est-à-dire suivant un plan qui, passant par l'axe A du pion d'encliquetage 22A, est perpendiculaire au plan suivant lequel s'étend la fente 23, un contour globalement rectangulaire.

D'une manière plus générale, ce contour est apte à envelopper celui de la section transversale du fil souple 20.

Dans les formes de réalisation représentées, l'évidement 25 a une largeur L3 au moins égale à la dimension L2 correspondante du fil souple 20.

Par exemple, et tel que représenté, cette largeur L3 est sensiblement égale à la dimension L2, tout en étant légèrement supérieure à celle-ci.

Son contour en élévation est ainsi apte à être tangent à celui de la section transversale de ce fil souple 20.

Il en résulte que, lorsqu'il est en prise avec le pion d'encliquetage 22A, le fil souple 20 n'est l'objet d'aucun serrage.

Mais, en variante, un tel serrage peut être prévu si désiré.

Il suffit, pour ce faire, que la largeur L3 de l'évidement 25 soit inférieure à la dimension L2 correspondante du fil souple 20.

Suivant des dispositions de même type que les précédentes, l'élément de boîte 10B comporte, en saillie sur son panneau de façade 14, sur la surface intérieure de celui-ci, un pion d'encliquetage 22B, et celui-ci présente une fente 23, qui le partage en deux portions 22'B, 22"B, et un évidement 25.

Dans les formes de réalisation représentées sur les figures 1 à 5, le renflement 21A, 21B présent aux extrémités du fil souple 20 est une simple butée d'arrêt formant garde.

Par exemple, et tel que représenté, ce renflement 21 A, 21 B est globalement sphérique.

Quoi qu'il en soit, il a, transversalement, une largeur L4 supérieure à la largeur L3 de l'évidement 25 du pion d'encliquetage 22A, 22B correspondant.

Préférentiellement, le renflement 21A, 21 B du fil souple 20 est d'un seul tenant avec celui-ci, en formant en pratique de moulage une seule et même pièce avec lui.

De même, le pion d'encliquetage 22A, 22B associé est, préférentiellement, d'un seul tenant avec l'élément de boîte 10A, 10B concerné, en formant en pratique de moulage une seule et même pièce avec lui.

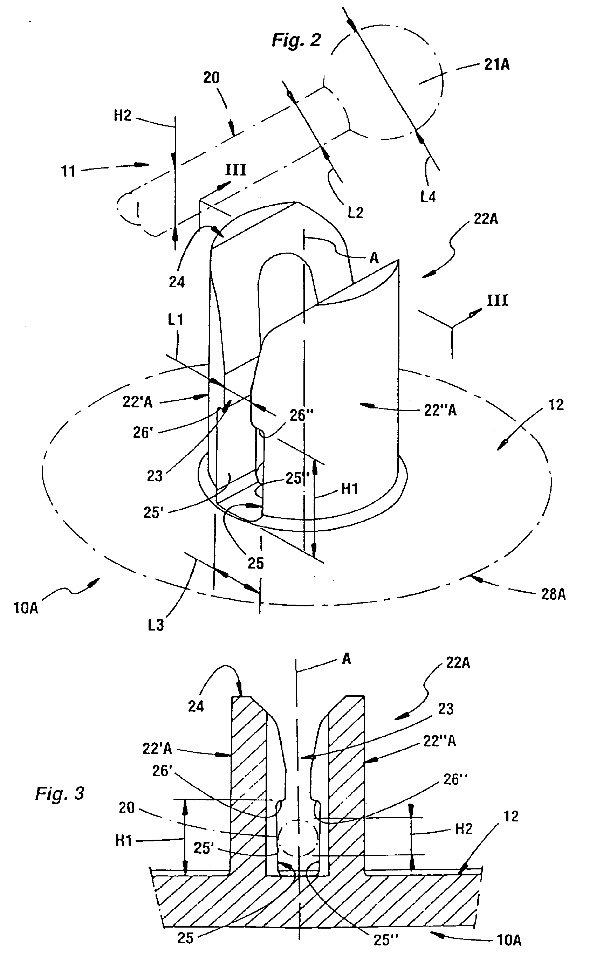

Mais, suivant une variante schématisée en traits interrompus sur les figures 1 et 2, ce pion d'encliquetage 22A, 22B appartient à une pièce 28A, 28B qui, distincte de l'élément de boîte 10A, 10B concerné, est rapportée sur celui-ci, par exemple par soudage ou collage.

Pour la mise en oeuvre du lien 11, il suffit d'engager les extrémités de son fil souple 20 dans la fente 23 des pions d'encliquetage 22A, 22B des éléments de boîte 10A, 10B, parallèlement au fond 12 pour ce qui concerne l'élément de boîte 10A, et parallèlement au panneau de façade 14 pour ce qui concerne l'élément de boîte 10B.

Ainsi qu'il est aisé de le comprendre, cet engagement implique temporairement un écartement élastique l'une par rapport à l'autre des deux portions 22'A, 22"A, 22'B, 22"B de ces pions d'encliquetage 22A, 22B, et il est poursuivi jusqu'à ce que, le fil souple 20 venant à franchir les crans de retenue 26', 26" correspondants, ces deux portions 22'A, 22"A, 22'B, 22"B reprennent élastiquement leur configuration initiale.

Le montage correspondant est donc particulièrement aisé et rapide, et il peut avantageusement se faire manuellement.

Il en est de même pour un éventuel démontage.

Il suffit, en effet, d'écarter l'une de l'autre les deux portions 22'A, 22"A, 22'B, 22"B des pions d'encliquetage 22A, 22B pour libérer le fil souple 20, par exemple en exerçant une simple traction sur celui-ci.

Cette libération peut, d'ailleurs, si désiré, n'être que partielle, en ne portant que sur l'un ou l'autre des deux éléments de boîte 10A, 10B, puisque cela suffit à permettre de désolidariser ces deux éléments de boîte 10A, 10B l'un par rapport à l'autre.

Le fil souple 20 reste alors attenant à l'un des éléments de boîte 10A, 10B.

Suivant un développement, non représenté, de cette disposition, le fil souple 20 est, à l'une de ses extrémités, solidarisé de manière permanente, par exemple par soudage, à l'élément de boîte 10A, 10B concerné, au lieu d'être encliqueté à celui-ci.

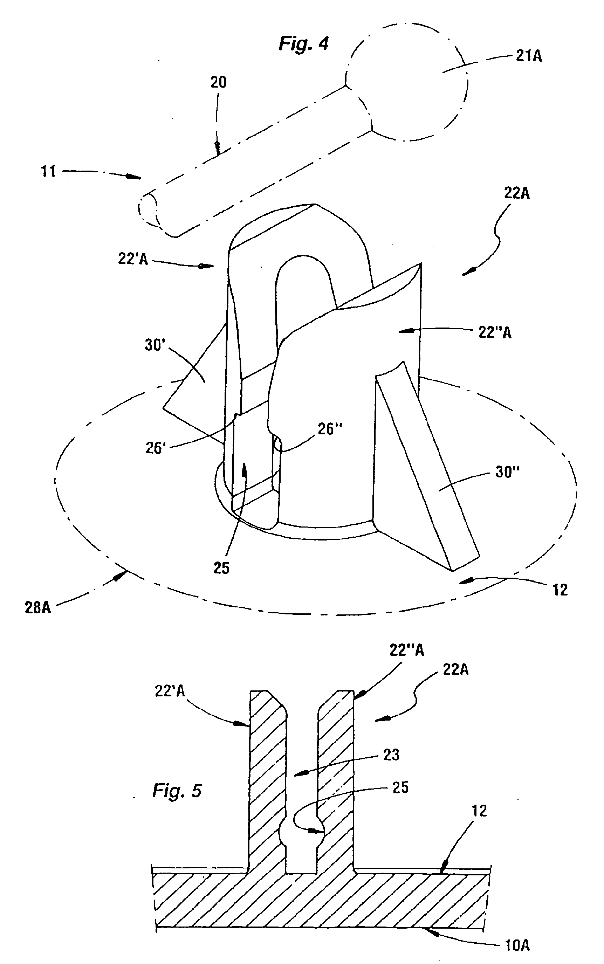

Dans la variante de réalisation représentée sur la figure 4, une nervure 30', 30" est adossée, extérieurement, à chacune des deux portions 22'A, 22"A du pion d'encliquetage 22A, pour un raidissement relatif de celui-ci, notamment au droit de l'évidement 25, et, si désiré, il en est de même pour le pion d'encliquetage 22B.

Dans la variante de réalisation représentée sur la figure 5, l'évidement 25 du pion d'encliquetage 22A a, en section transversale, un contour complémentaire de celui de la section transversale du fil souple 20. Il a donc, en l'espèce, un contour globalement circulaire.

Comme précédemment, une disposition de même type est reprise pour le pion d'encliquetage 22B si désiré.

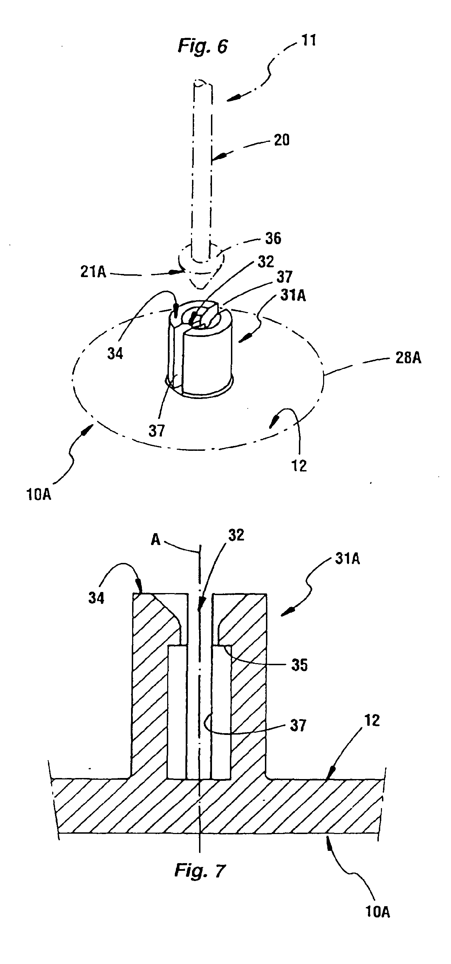

Dans la forme de réalisation représentée sur les figures 6 et 7, pour l'une au moins des extrémités du fil souple 20, et, par exemple, pour celle concernée par l'élément de boîte 10A, comme représenté, l'encliquetage recherché intervient au niveau du renflement 21A correspondant de celui-ci.

Plus précisément, dans cette forme de réalisation, par l'extrémité du fil souple 20 présentant un tel renflement 21A, le lien 11 est en prise avec un pion d'encliquetage 31A solidaire de l'élément de boîte 10A concerné, ce pion d'encliquetage 31 A présentant, axialement, un puits 32, qui s'étend sur une partie au moins de sa hauteur à compter de son extrémité libre 34, et dans lequel le fil souple 20 est engagé par son renflement 21A, avec, de manière complémentaire, dans le puits 32 et sur le renflement 21 A, des crans de retenue 35, 36, qui s'étendent sensiblement transversalement par rapport à l'axe A du pion d'encliquetage 31A.

Comme précédemment, le pion d'encliquetage 31A fait saillie sur le fond 12 de l'élément de boîte 10A, sur la surface intérieure de ce fond 12.

Préférentiellement, pour conférer radialement au pion d'encliquetage 31A une certaine élasticité, le puits 32 est ouvert latéralement par au moins une fente 37.

Par exemple, et tel que représenté, deux fentes 37 sont prévues, en positions diamétralement opposées l'une par rapport à l'autre, et elles s'étendent l'une et l'autre sur toute la hauteur du pion d'encliquetage 31A.

Dans la forme de réalisation représentée, le renflement 21A du fil souple 20 est globalement conique, ou tronconique.

Conjointement, le puits 32 du pion d'encliquetage 31 A est évasé vers l'extérieur à l'extrémité libre 34 de ce pion d'encliquetage 31A.

Lors de la mise en place du lien 11, le fil souple 20 est présenté perpendiculairement au fond 12 de l'élément de boîte 10A, pour son engagement, par son renflement 21A, dans le puits 32 du pion d'encliquetage 31A.

Comme précédemment, cet engagement implique temporairement une déformation élastique du pion d'encliquetage 31A, et il est poursuivi jusqu'à ce que le cran de retenue 36 du renflement 21A du fil souple 20 ait franchi le cran de retenue 35 du pion d'encliquetage 31A.

Comme précédemment, également, le démontage est possible.

Si désiré, des dispositions du même type sont adoptées à l'autre extrémité du fil souple 20, c'est-à-dire à l'extrémité de ce fil souple 20 concernée par l'élément de boîte 10B formant couvercle.

Pour ce faire, le fil souple 20 présente, à cette autre extrémité, un renflement 21B, non visible sur les figures, analogue au renflement 21A, et l'élément de boîte 10B est équipé d'un pion d'encliquetage 31B également non visible sur les figures, et analogue au pion d'encliquetage 31A.

Bien entendu, la présente invention ne se limite pas aux formes de réalisation décrites et représentées, mais englobe toute variante d'exécution et/ou de combinaison de leurs divers éléments.

En outre, au lieu de s'étendre du fond d'un des éléments de boîte concernés au panneau de façade de l'autre de ceux-ci, le lien suivant l'invention peut tout aussi bien s'étendre entre la paroi latérale d'un tel élément de boîte et le bord tombé de l'autre.

De même, au lieu de s'étendre à l'intérieur de la boîte, ce lien peut tout aussi bien s'étendre à l'extérieur de celle-ci.

Enfin, au lieu que le fil souple intervienne à la manière d'un élément mâle dans l'encliquetage recherché, il peut tout aussi bien intervenir à la manière d'un élément femelle, le pion d'encliquetage associé formant, alors, lui, un élément mâle.

Par exemple, en variante de la forme de réalisation représentée sur les figures 1 à 3, le renflement présent à l'une au moins des extrémités du fil souple peut former un oeillet, et, en variante de la forme de réalisation représentée sur les figures 6, 7, il peut être en forme de cloche.

## Revendications

1. Boîte pour équipement électrique, du genre comportant deux éléments de boîte (10A, 10B) distincts et complémentaires, à savoir un corps de boîte et un couvercle, et un lien (11) établi de l'un à l'autre de ces deux éléments de boîte (10A, 10B), ce lien comportant un fil souple (20) qui, par ses extrémités, est attelé aux éléments de boîte (10A, 10B), et qui, à l'une de ses extrémités, au moins, présente un renflement (21A, 21B), **caractérisée en ce que,** par l'extrémité du fil souple (20) présentant un renflement (21A, 21B), le lien (11) est simplement en prise par encliquetage, et donc de manière aisément démontable, avec l'élément de boîte (10A, 10B) concerné.

2. Boîte suivant la revendication 1, **caractérisée en ce que,** pour l'une au moins des extrémités du fil souple (20), l'encliquetage recherché intervient directement au niveau de ce fil souple (20).

3. Boîte suivant la revendication 2, **caractérisée en ce que,** par l'extrémité du fil souple (20) présentant un renflement (21A, 21B), le lien (11) est en prise avec un pion d'encliquetage (22A, 22B) solidaire de l'élément de boîte (10A, 10B) concerné, ce pion d'encliquetage (22A, 22B) présentant une fente (23), qui s'étend sur une partie, au moins, de sa hauteur à compter de son extrémité libre (24), et dont la largeur (L1) est inférieure à la dimension (L2) correspondante du fil souple (20), avec, formant localement un épanouissement de cette fente (23), pour la réception du fil souple (20), un évidement (25), qui s'étend transversalement par rapport à l'axe (A) du pion d'encliquetage (22A, 22B).

4. Boîte suivant la revendication 3, **caractérisée en ce que** l'évidement (25) s'étend axialement sur une hauteur (H1) supérieure à la dimension (H2) correspondante du fil souple (20).

5. Boîte suivant l'une quelconque des revendications 3, 4, **caractérisée en ce que**, du côté de l'extrémité libre (24) du pion d'encliquetage (22A, 22B), les deux portions (25', 25") de l'évidement (25) correspondant chacune respectivement aux deux portions (22'A, 22"A, 22'B, 22"B) du pion d'encliquetage (22A, 22B) délimitées par la fente (23) sont chacune délimitées par un cran de retenue (26', 26") qui s'étend sensiblement transversalement par rapport à l'axe (A) du pion d'encliquetage (22A, 22B).

6. Boîte suivant l'une quelconque des revendications 3 à 5, **caractérisée en ce que** l'évidement (25) a une largeur (L3) au moins égale à la dimension (L2) correspondante du fil souple (20).

7. Boîte suivant l'une quelconque des revendications 3 à 6, **caractérisée en ce que** l'évidement (25) a, en élévation, un contour globalement rectangulaire.

8. Boîte suivant l'une quelconque des revendications 3 à 6, **caractérisée en ce que** l'évidement (25) a, en section transversale, un contour complémentaire de celui de la section transversale du fil souple (20).

9. Boîte suivant l'une quelconque des revendications 3 à 7, **caractérisée en ce que,** à l'extrémité libre (24) du pion d'encliquetage (22A, 22B), la fente (23) est évasée vers l'extérieur.

10. Boîte suivant l'une quelconque des revendications 3 à 9, **caractérisée en ce que** le renflement (21A, 21B) du fil souple (20) est une simple butée d'arrêt formant garde.

11. Boîte suivant la revendication 10, **caractérisée en ce que** le renflement (21A, 21B) du fil souple (20) est globalement sphérique.

12. Boîte suivant la revendication 1, **caractérisée en ce que,** pour l'une au moins des extrémités du fil souple (20), l'encliquetage recherché intervient au niveau du renflement (21A) correspondant de celui-ci.

13. Boîte suivant la revendication 12, **caractérisée en ce que,** par l'extrémité du fil souple (20) présentant un renflement (21A, 21B), le lien (11) est en prise avec un pion d'encliquetage (31A, 31B) solidaire de l'élément de boîte (10A, 10B) concerné, ce pion d'encliquetage (31A, 31B) présentant, axialement, un puits (32), qui s'étend sur une partie au moins de sa hauteur à compter de son extrémité libre (34), et dans lequel le fil souple (20) est engagé par son renflement (21A, 21B), avec, de manière complémentaire, dans le puits (32) et sur le renflement (21A, 21B), des crans de retenue (35, 36), qui s'étendent sensiblement transversalement par rapport à l'axe (A) du pion d'encliquetage (31A, 31B).

14. Boîte suivant la revendication 13, **caractérisée en ce que** le puits (32) du pion d'encliquetage (31A, 31B) est ouvert latéralement par au moins une fente (37).

15. Boîte suivant l'une quelconque des revendications 13, 14, **caractérisée en ce que** le renflement (21A, 21B) du fil souple (20) est globalement conique, ou tronconique.

16. Boîte suivant l'une quelconque des revendications 13 à 15, **caractérisée en ce que,** à l'extrémité libre (34) du pion d'encliquetage (31A, 31B), le puits (32) est évasé vers l'extérieur.

17. Boîte suivant l'une quelconque des revendications 3 et 13, **caractérisée en ce que** le pion d'encliquetage (22A, 22B, 31A, 31B) est d'un seul tenant avec l'élément de boîte (10A, 10B) concerné.

18. Boîte suivant l'une quelconque des revendications 3 et 13, **caractérisée en ce que** le pion d'encliquetage (22A, 22B, 31A, 31B) appartient à une pièce (28A, 28B) qui, distincte de l'élément de boîte (10A, 10B) concerné, est rapportée sur celui-ci.

19. Boîte suivant l'une quelconque des revendications 1 à 18, **caractérisée en ce que** le renflement (21A, 21B) du fil souple (20) est d'un seul tenant avec celui-ci.

20. Boîte suivant l'une quelconque des revendications 1 à 19, **caractérisée en ce que** le fil souple (20) présente un renflement (21A, 21B) à chacune de ses extrémités.

21. Boîte suivant l'une quelconque des revendications 1 à 20, **caractérisée en ce que** le fil souple (20) a, en section transversale, un contour circulaire.

22. Boîte suivant l'une quelconque des revendications 1 à 21, **caractérisée en ce que** le lien (11) s'étend de la surface intérieure de l'un des éléments de boîte (10A, 10B) à la surface intérieure de l'autre de ceux-ci.

## Claims

1. A housing for electrical equipment of the kind comprising two separate complementary housing elements (10A, 10B), namely a housing body and a cover, and a tether (11) from one of said two housing elements (10A, 10B) to the other, said tether comprising a flexible wire (20) which by way of its ends is attached to the housing elements (10A, 10B) and which at one of its ends at least has an enlargement portion (21A, 21B), **characterised in that** by way of the end of the flexible wire (20) having an enlargement portion (21A, 21B), the tether (11) is simply in engagement with the housing element (10A, 10B) in question by latching engagement and therefore in easily removable fashion.

2. A housing according to claim 1 **characterised in that,** for one at least of the ends of the flexible wire (20), the required latching engagement occurs directly at the level of said flexible wire (20).

3. A housing according to claim 2 **characterised in that,** by way of the end of the flexible wire (20) having an enlargement portion (21A, 21B), the tether (11) is in engagement with a latching projection (22A, 22B) which is fixed with respect to the housing element (10A, 10B) in question, said latching projection (22A, 22B) having a slot (23) which extends over a part at least of its height from its free end (24) and the width (L1) of which is smaller than the corresponding dimension (L2) of the flexible wire (20), with, locally forming an expansion of said slot (23) for receiving the flexible wire (20), an opening (25) which extends transversely with respect to the axis (A) of the latching projection (22A, 22B).

4. A housing according to claim 3 **characterised in that** the opening (25) extends axially over a height (H1) greater than the corresponding dimension (H2) of the flexible wire (20).

5. A housing according to either one of claims 3 and 4 **characterised in that,** at the side of the free end (24) of the latching projection (22A, 22B), the two portions (25', 25") of the opening (25) each respectively corresponding to the two portions (22'A, 22"A, 22'B, 22"B) of the latching projection (22A, 22B), that are delimited by the slot (23), are each delimited by a retaining shoulder (26', 26") which extends substantially transversely with respect to the axis (A) of the latching projection (22A, 22B).

6. A housing according to any one of claims 3 to 5 **characterised in that** the opening (25) is of a width (L3) at least equal to the corresponding dimension (L2) of the flexible wire (20).

7. A housing according to any one of claims 3 to 6 **characterised in that** in elevation the opening (25) is of a generally rectangular contour.

8. A housing according to any one of claims 3 to 6 **characterised in that** in cross-section the opening (25) is of a contour complementary to that of the cross-section of the flexible wire (20).

9. A housing according to any one of claims 3 to 7 **characterised in that** at the free end (24) of the latching projection (22A, 22B) the slot (23) is flared outwardly.

10. A housing according to any one of claims 3 to 9 **characterised in that** the enlargement portion (21A, 21B) of the flexible wire (20) is a simple stop abutment forming a keeper.

11. A housing according to claim 10 **characterised in that** the enlargement portion (21A, 21B) of the flexible wire (20) is generally spherical.

12. A housing according to claim 1 **characterised in that,** for one at least of the ends of the flexible wire (20), the desired latching engagement occurs at the level of the corresponding enlargement portion (21A) thereof.

13. A housing according to claim 12 **characterised in that,** by way of the end of the flexible wire (20) having an enlargement portion (21A, 21B), the tether (11) is in engagement with a latching projection (31A, 31B) which is fixed with respect to the housing element (10A, 10B) in question, said latching projection (31A, 31B) axially having a hole (32) which extends over a part at least of its height from its free end (34) and in which the flexible wire (20) is engaged by way of its enlargement portion (21A, 21B), with in complementary relationship in the hole (32) and on the enlargement portion (21A, 21B) retaining shoulders (35, 36) which extend substantially transversely with respect to the axis (A) of the latching projection (31A, 31B).

14. A housing according to claim 13 **characterised in that** the hole (32) of the latching projection (31A, 31B) is open laterally by way of at least one slot (37).

15. A housing according to either one of claims 13 and 14 **characterised in that** the enlargement portion (21A, 21B) of the flexible wire (20) is generally conical or frustoconical.

16. A housing according to any one of claims 13 to 15 **characterised in that** at the free end (34) of the latching projection (31A, 31B) the hole (32) is flared outwardly.

17. A housing according to either one of claims 3 and 13 **characterised in that** the latching projection (22A, 22B, 31A, 31B) is in one piece with the housing element (10A, 10B) in question.

18. A housing according to either one of claims 3 and 13 **characterised in that** the latching projection (22A, 22B, 31A, 31B) belongs to a part (22A, 22B) which, being separate from the housing element (10A., 10B) in question, is fitted thereto.

19. A housing according to any one of claims 1 to 18 **characterised in that** the enlargement portion (21A, 21B) of the flexible wire (20) is in one piece therewith.

20. A housing according to any one of claims 1 to 19 **characterised in that** the flexible wire (20) has an enlargement portion (21A, 21B) at each of its ends.

21. A housing according to any one of claims 1 to 20 **characterised in that** in cross-section the flexible wire (20) is of a circular contour.

22. A housing according to any one of claims 1 to 21 **characterised in that** the tether (11) extends from the internal surface of one of the housing elements (10A, 10B) to the internal surface of the other thereof.

## Patentansprüche

1. Dose für elektrische Ausrüstung der Art mit zwei getrennten und zueinander komplementären Dosenelementen (10A, 10B), nämlich einem Dosenkörper und einem Deckel, und einer zwischen den beiden Dosenelementen (10A, 10B) hergestellten Verbindung (11), wobei diese Verbindung eine flexible Schnur (20) aufweist, die mit ihren Enden an den Dosenelementen (10A, 10B) angebracht ist und die an wenigstens einem ihrer Enden eine Verdickung (21A, 21B) aufweist,
**dadurch gekennzeichnet, dass** die Verbindung (11) mit dem eine Verdickung (21A, 21B) aufweisenden Ende der flexiblen Schnur nur durch Einrasten, und somit leicht lösbar, mit dem betreffenden Dosenelement (10A, 10B) in Eingriff ist.

2. Dose nach Anspruch 1,
**dadurch gekennzeichnet, dass** das beabsichtigte Einrasten bei wenigstens einem der Enden der flexiblen Schnur (20) direkt in Höhe der flexiblen Schnur (20) erfolgt.

3. Dose nach Anspruch 2,
**dadurch gekennzeichnet, dass** die Verbindung (11) mit dem eine Verdickung (21A, 21B) aufweisenden Ende der flexiblen Schnur (20) mit einem Raststift (22A, 22B) in Eingriff ist, der mit dem betreffenden Dosenelement (10A, 10B) fest verbunden ist, wobei der Raststift (22A, 22B) einen Schlitz (23) aufweist, der sich von seinem freien Ende (24) aus über wenigstens einen Teil seiner Höhe erstreckt und dessen Breite (L1) geringer ist als die jeweilige Abmessung (L2) der flexiblen Schnur (20), wobei sich eine zur Aufnahme der flexiblen Schnur (20) stellenweise eine Erweiterung des Schlitzes (23) bildende Aussparung (25) zur Achse (A) des Rastfingers (22A, 22B) quer erstreckt.

4. Dose nach Anspruch 3,
**dadurch gekennzeichnet, dass** sich die Aussparung (25) axial über eine Höhe (H1) erstreckt, die größer ist als die jeweilige Abmessung (H2) der flexiblen Schnur (20).

5. Dose nach einem der Ansprüche 3, 4,
**dadurch gekennzeichnet, dass** auf der Seite des freien Endes (24) des Raststifts (22A, 22B) die beiden Teile (25', 25") der Aussparung (25), die jeweils den beiden durch den Schlitz (23) begrenzten Teilen (22'A, 22"A, 22'B, 22"B) des Raststifts (22A, 22B) entsprechen, jeweils durch eine Halteraste (26', 26") begrenzt sind, die sich zur Achse (A) des Raststifts (22A, 22B) im Wesentlichen quer erstreckt.

6. Dose nach einem der Ansprüche 3 bis 5,
**dadurch gekennzeichnet, dass** die Aussparung (25) eine Breite (L3) hat, die mindestens der jeweiligen Abmessung (L2) der flexiblen Schnur (20) entspricht.

7. Dose nach einem der Ansprüche 3 bis 6,
**dadurch gekennzeichnet, dass** die Aussparung (25) im Aufriss einen allgemein rechteckigen Umfang hat.

8. Dose nach einem der Ansprüche bis 6,
**dadurch gekennzeichnet, dass** die Aussparung (25) im Querschnitt einen Umfang hat, der zu dem des Querschnitts der flexiblen Schnur (20) komplementär ist.

9. Dose nach einem der Ansprüche bis 7,
**dadurch gekennzeichnet, dass** der Schlitz (23) am freien Ende (24) des Raststifts (22A, 22B) nach außen erweitert ist.

10. Dose nach einem der Ansprüche bis 9,
**dadurch gekennzeichnet, dass** die Verdickung (21A, 21B) der flexiblen Schnur (20) ein einfacher eine Sperre bildender Arretieranschlag ist.

11. Dose nach Anspruch 10,
**dadurch gekennzeichnet, dass** die Verdickung (21A, 21B) der flexiblen Schnur (20) allgemein kugelförmig ist.

12. Dose nach Anspruch 1,
**dadurch gekennzeichnet, dass** das beabsichtigte Einrasten bei wenigstes einem der Enden der flexiblen Schnur (20) in Höhe von deren jeweiligen Verdickung (21A) erfolgt.

13. Dose nach Anspruch 12,
**dadurch gekennzeichnet, dass** die Verbindung (11) mit dem eine Verdickung (21A, 21B) aufweisenden Ende der flexiblen Schnur (20) mit einem Raststift (31A, 31B) in Eingriff ist, der mit dem betreffenden Dosenelement (10A, 10B) fest verbunden ist, wobei der Raststift (31A, 31B) axial einen Schacht (32) aufweist, der sich von seinem freien Ende (34) aus über wenigstens einen Teil seiner Höhe erstreckt und in den die flexible Schnur (20) mit ihrer verdickung (21A, 21B) eingesteckt ist, wobei Halterasten (35, 36), die im Schacht (32) und an der Verdickung (21A, 21B) komplementär zueinander ausgeführt sind, zur Achse (A) des Raststifts (31A, 31B) Im Wesentlichen quer verlaufen.

14. Dose nach Anspruch 13,
**dadurch gekennzeichnet, dass** der Schacht (32) des Raststifts (31A, 31B) durch wenigstens einen Schlitz (37) seitlich offen ist.

15. Dose nach einem der Ansprüche 13, 14,
**dadurch gekennzeichnet, dass** die Verdickung (21A, 21B) der flexiblen Schnur (20) allgemein kegelförmig oder kegelstumpfartig ist.

16. Dose nach einem der Ansprüche 13 bis 15,
**dadurch gekennzeichnet, dass** der Schacht (32) am freien Ende des Raststifts (31A, 31B) nach außen erweitert ist.

17. Dose nach einem der Ansprüche 3 oder 13,
**dadurch gekennzeichnet, dass** der Raststift (22A, 22B, 31A, 31B) mit dem betreffenden Dosenelement (10A, 10B) einstückig ausgebildet Ist.

18. Dose nach einem der Ansprüche 3 oder 13,
**dadurch gekennzeichnet, dass** der Raststift (22A, 22B, 31A, 31B) zu einem Stück (28A, 28B) gehört, das an diesem getrennt von dem Dosenelement (10A, 10B) angesetzt ist.

19. Dose nach einem der Ansprüche bis 18,
**dadurch gekennzeichnet, dass** die Verdickung (21A, 21B) der flexiblen Schnur (20) mit dieser einstückig ausgebildet ist.

20. Dose nach einem der Ansprüche 1 bis 19,
**dadurch gekennzeichnet, dass** die flexible Schnur (20) an jedem ihrer Enden eine Verdickung (21A, 21B) aufweist.

21. Dose nach einem der Ansprüche 1 bis 20,
**dadurch gekennzeichnet, dass** die flexible Schnur (20) im Querschnitt einen runden Umfang hat.

22. Dose nach einem der Ansprüche 1 bis 21,
**dadurch gekennzeichnet, dass** sich die Verbindung (11) von der Innenseite eines der Dosenelemente (10A, 10B) zur Innenseite des anderen erstreckt.
